**Europäisches Patentamt**

**European Patent Office**

**Office européen des brevets**

(19)

(11) Veröffentlichungsnummer: **0 155 490**
**B1**

(12) ## EUROPÄISCHE PATENTSCHRIFT

(45) Veröffentlichungstag der Patentschrift:
**06.04.88**

(21) Anmeldenummer: **85101329.2**

(22) Anmeldetag: **08.02.85**

(51) Int. Cl.⁴: **B 23 K 20/16,** B 23 K 35/00,
B 23 K 35/30

(54) Verfahren zum Verbinden von Teil-Werkstücken aus einer Superlegierung nach dem Diffusions-Fügeprocess.

(30) Priorität: **23.02.84 CH 886/84**

(43) Veröffentlichungstag der Anmeldung:
**25.09.85 Patentblatt 85/39**

(45) Bekanntmachung des Hinweises auf die Patenterteilung:
**06.04.88 Patentblatt 88/14**

(84) Benannte Vertragsstaaten:
**CH DE FR GB LI**

(56) Entgegenhaltungen:
**DE-A-2 805 233**
**DE-B-1 260 279**
**FR-A-1 195 124**
**US-A-3 632 319**
**US-A-3 696 500**

**HIGH TEMPERATURE ALLOYS FOR GAS
TURBINES, 1982, Seiten 1043-1050, D. REIDEL
PUBLISHING CO., Dordrecht, NL; G. HAUFLER
u.a.: "Diffusion bonding of superalloys for gas
turbines"**

(73) Patentinhaber: **BBC Brown Boveri AG, CH- 5401
Baden (CH)**

(72) Erfinder: **Nazmy, Mohamed Yousef, Dr., Geelig 2,
CH- 5412 Gebenstorf (CH)**

EP 0 155 490 B1

## Beschreibung

Die Erfindung geht aus von einem Verfahren zum Verbinden von Teil-Werkstücken nach der Gattung des Oberbegriffs des Anspruchs 1.

Unter den Verfahren zum Verbinden von Bauteilen aus Hochtemperatur-Werkstoffen nehmen die die Diffusion ausnützenden Schweiss- und Fügeprozesse eine hervorragende Stellung ein. Das Diffusions-Fügen ohne Zusatzmaterial, eine Art Press-Schweissen unterhalb der Soliduslinie der zu verbindenden Werkstoffe ist bekannt (R. Brunetaud, D. Coutsouradis, T.B. Gibbons, Y. Lindblom, D.B. Meadowcroft, R. Stickler, High Temperature Alloys for Gas Turbines 1982, D. Reidel Publishing Company, Dordrecht, Holland/Boston, U.S.A./London, England, insbesondere Diffusion Bonding of Superalloys for Gas Turbines, Seiten 1043 bis 1050). Andererseits sind auch Verbindungsverfahren ähnlicher Art unter Verwendung von Zusatzmaterial in Form von einer oder von mehreren Zwischenschichten vorgeschlagen worden (Hanno Brenninghoff, "Diffusionsschweissen, Verfahren, Anwendungen, Werkstoffe, Prüfen", DVS-Bericht 69 über Internationales Kolloquium "Hart- und Hochtemperaturlöten und Diffusionsschweissen" Essen 21./22.9.1981, Abdruck in Technische Rundschau Nr. 5, 2. Februar 1982).

Für die Wiederinstandstellung von beschädigten oder abgenutzten Turbinenschaufeln aus Superlegierungen sind in Anbetracht der hohen Kosten und der Risikogefahr bei der Anwendung konventioneller Schweissverfahren (Auftragschweissung) entsprechende Hartlötverfahren vorgeschlagen und entwickelt worden. Dabei werden unter anderem auch Zusatzmaterialien in Pulverform verwendet (vgl. das oben zitierte Werk High Temperature Alloys for Gas Turbines 1982, insbesondere das Kapitel Blade Repair and Recovery, Seiten 931 bis 954, speziell "Repair Brazing of Superalloy Gas Turbine Components, Seiten 945 bis 950).

Beim herkömmlichen Diffusions-Fügen ist es erforderlich, dass die zu verbindenden Oberflächen der Teil-Werkstücke sehr genau bearbeitet werden und in der Regel ebene Flächen sein müssen. Nur dann ist ein monolithisches Erzeugnis gewährleistet, bei welchem eine Zwischenzone vermieden wird und eine nachfolgende Wärmebehandlung (z. B. Grobkornglühung) mit vollem Erfolg über den ganzen Werkstückquerschnitt gewährleistet werden kann. Das Verfahren ist daher aufwendig und zeitraubend und lässt dem Konstrukteur nur beschränkte Freiheiten in der Werkstückgestaltung. Beim Hartlöten andererseits treten immer Zwischenzonen auf, deren Gefüge sich von demjenigen des Grundwerkstoffes unterscheiden. Dazu besteht die Gefahr der Porenbildung in diesen Übergangs- und Zwischenschichten mit allen ihren nachteiligen Folgen auf die Gefügeausbildung. Von monolithischen Erzeugnissen kann daher nicht die Rede sein.

Es besteht ein grosses Bedürfnis nach Verbesserung der bekannten Verfahren, um die oben angeführten Schwierigkeiten bestmöglichst zu überwinden.

Der Erfindung liegt die Aufgabe zugrunde, ein auf dem Diffusions-Fügeprozess basierendes Verfahren anzugeben, welches unter Vermeidung enger Toleranzen der zu verbindenden Werkstückoberflächen sowie jeglicher, zu Porosität neigender Zwischenzonen zeitsparend ist, zu monolithischen Erzeugnissen führt und sich insbesondere für Superlegierungen, vor allem dispersionsgehärtete Nickelbasislegierungen eignet.

Diese Aufgabe wird durch die im Anspruch 1 angegebenen Merkmale gelöst.

Die Erfindung wird anhand der nachfolgenden durch Figuren näher erläuterten Ausführungsbeispiele beschrieben.

Dabei zeigt:

Fig. 1 das Zusammenfügen von zwei Teil-Werkstücken aus der gleichen Legierung im Aufriss,

Fig. 2 das Zusammenfügen von zwei Teil-Werkstücken aus verschiedenen Legierungen im Aufriss,

Fig. 3 das Zusammenfügen von zwei Teil-Werkstücken unter Verwendung einer gerillten Fügefläche im Längsschnitt (Aufriss),

Fig. 4 das Zusammenfügen von zwei Teil-Werkstücken unter Verwendung von konvexen und konkaven Formen der Fügeflächen im Längsschnitt (Aufriss).

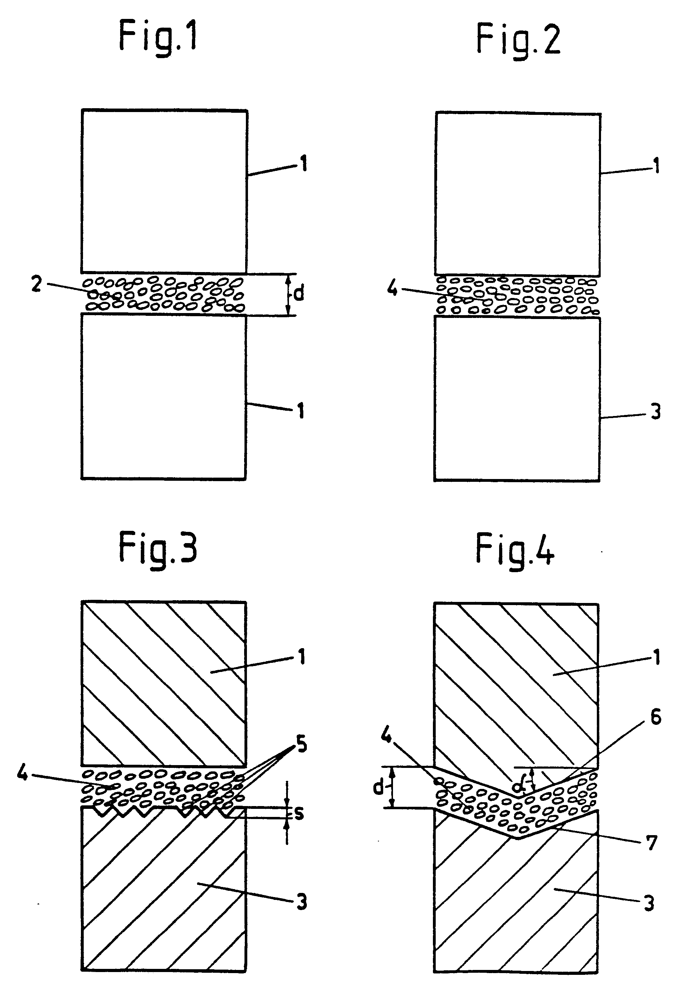

In Fig. 1 ist das Zusammenfügen von Bauteilen unter Verwendung von ebenen Fügeflächen im Aufriss dargestellt. 1 ist ein Teil-Werkstück aus einer Hochtemperaturlegierung A (z. B. dispersionsgehärtete Nickelbasis-Superlegierung). Der Querschnitt von 1 kann kreisförmig, quadratisch, rechteckig oder beliebig sein. Im vorliegenden Fall wurden im allgemeinen zylindrische Teil-Werkstücke 1 untersucht. 2 ist ein eine Zwischenschicht bildendes Pulver aus der gleichen Hochtemperaturlegierung A mit einer Partikelgrösse von vorzugsweise 50 bis 250 μm. Der die Schichtdicke bestimmende Abstand d der Teil-Werkstücke 1 beträgt vorzugsweise 1 bis 2 mm.

Fig. 2 zeigt im Aufriss das Zusammenfügen von Bauteilen unter Verwendung von ebenen Fügeflächen, wobei diese verschiedene Zusammensetzungen aufweisen. 1 ist ein Teil-Werkstück aus einer Hochtemperaturlegierung A (z. B. dispersionsgehärtete Nickelbasis-Superlegierung), während 3 ein Teil-Werkstück aus einer anderen Hochtemperaturlegierung B (z. B. nicht-dispersionsgehärtete Nickelbasis-Superlegierung mit sonst gleicher oder ähnlicher Zusammensetzung wie Legierung A) darstellt. 4 ist ein Pulver aus einer Legierung A/B, deren Zusammensetzung vorteilhafterweise irgendwo zwischen Legierung A und Legierung B liegt, oder ein entsprechendes Pulvergemisch. Was Abstand d der Teil-Werkstücke 1 und 3 sowie Partikelgrösse des Pulvers 4 betrifft, gilt analog das unter Fig. 1 Gesagte.

In Fig. 3 ist das Zusammenfügen von zwei Teil-Werkstücken im Längsschnitt (Aufriss) dargestellt, wobei eine gerillte Fügefläche Verwendung findet. 1 und 4 entsprechen genau den Bezugzeichen in Fig. 2. Das Teil-Werkstück 3, bestehend aus der Hochtemperaturlegierung B ist hier an seiner Fügefläche mit dreieckförmigen Rillen 5 versehen. Die entsprechend Rillentiefe s wird vorteilhafterweise ca. 0,25 mm gewählt. Die Rillen können auch ein anderes als ein Dreieckprofil aufweisen. Der Rillenabstand ist nicht kritisch und kann je nach Verhältnissen in ziemlich weiten Grenzen variieren.

Fig. 4 zeigt im Längsschnitt (Aufriss) das Zusammenfügen von Bauteilen, wobei ein Teil-Werkstück eine konkave, das andere eine konvexe Fügefläche besitzt. Das Teil-Werkstück 1 aus der Legierung A weist eine konvexe Form 6 der Fügefläche auf, die im vorliegenden Fall eines zylindrischen Körpers z. B. vorteilhafterweise als Vollkegel ausgebildet ist. Der Schrägungswinkel α stellt die Neigung gegenüber einer ebenen, auf der Längsachse von 1 senkrechten Fläche dar und beträgt vorzugsweise ca. 20° (voller Öffnungswinkel des Kegels = 140°). Das Teil-Werkstück 3 aus der Legierung B weist eine konkave Form 7 der Fügefläche auf, die hier als Hohlkegel ausgebildet ist. Selbstverständlich ist hier der nicht eingezeichnete Schrägungswinkel der gleiche wie für das Teil-Werkstück 1. Alle übrigen Bezugzeichen entsprechen denjenigen von Fig. 1 bzw. Fig. 2.

**Ausführungsbeispiel I:**

Siehe Fig. 1 und Fig. 3

Aus einer feinkörnigen oxyddispersionsgehärteten Nickelbasis-Superlegierung mit der Handelsbezeichnung "MA 6000" (von Inco) wurden je zwei zylindrische Körper von 11 mm Durchmesser und 16 mm Höhe herausgearbeitet. Die Fügefläche des einen Teil-Werkstücks wurde gemäss Fig. 3 mit 3 ringförmigen 0,25 mm tiefen Rillen 5 versehen. Die Legierung hatte die nachfolgende Zusammensetzung:

| | | | |
|---|---|---|---|
| Cr | = | 15 | Gew.-% |
| W | = | 4,0 | Gew.-% |
| Mo | = | 2,0 | Gew.-% |
| Al | = | 4,5 | Gew.-% |
| Ti | = | 2,5 | Gew.-% |
| Ta | = | 2,0 | Gew.-% |
| C | = | 0,05 | Gew.-% |
| B | = | 0,01 | Gew.-% |
| Zr | = | 0,15 | Gew.-% |
| $Y_2O_3$ | = | 1,1 | Gew.-% |
| Ni | = | Rest | |

Auf das mit Rillen 5 versehene Teil-Werkstück wurde eine 1,5 mm dicke Pulverschicht aus der gleichen Legierung aufgebracht. Die Partikelgrösse variierte von 50 μm bis zu 250 μm. Daraufhin wurde das Teil-Werkstück mit ebener Fügefläche koaxial aufgesetzt und das Ganze unter Argonatmosphäre in einer Presse auf 950°C erhitzt. Der Diffusions-Fügeprozess bestand in einem Heisspressen unter folgenden Bedingungen:

Presstemperatur:        950°C
Verformungsgeschwindigkeit $\dot{\varepsilon}$:    $3.10^{-1}s^{-1}$
Verformungsgrad ε:       0,15

Dabei war wie folgt definiert:

$$\dot{\varepsilon} = d \frac{\left[\left|\ln \frac{A_o}{A_f}\right|\right]}{dt} \quad ,$$

$A_o$ = Querschnittsfläche des Werkstücks vor der Umformung,
$A_f$ = Querschnittsfläche des Werkstücks nach der Umformung,
ln = natürlicher Logarithmus
t = Zeit in Sekunden.

Das fertig gefügte, zunächst in feinkörnigem Zustand vorliegende Werkstück wurde nun einer weiteren Wärmebehandlung in Form einer Grobkornglühung bei 1265°C während 1 h unter Argonatmosphäre unterworfen. Aus dem fertigen Werkstück wurden Proben herausgearbeitet und die mechanischen Festigkeitswerte bei Raumtemperatur bestimmt. Es wurde eine Zugfestickeit von 589 MPa gemessen.

**Ausführungsbeispiel II:**

Aus der gleichen Nickelbasis-Superlegierung mit der Handelsbezeichnung "MA 6000" wurden in genau gleicher Weise, wie in Beispiel I beschrieben, Teil-Werkstücke gefertigt und nach dem Diffusions-Fügeprozess miteinander verbunden. Die Bedingungen waren diesmal wie folgt:

Presstemperatur:        1000°C
Verformungsgeschwindigkeit $\dot{\varepsilon}$:    $3.10^{-1}s^{-1}$
Verformungsgrad ε:       0,15
Nachfolgende Wärmebehandlung: 1265°C/2 h/Ar

Die Zugfestigkeit bei Raumtemperatur wurde mit 652 MPa bestimmt.

**Ausführungsbeispiel III:**

Ähnlich Beispiel I wurde aus zwei leicht verschiedenen Nickelbasis-Superlegierungen je ein Teil-Werkstück gemäss Fig. 3 herausgearbeitet. Die Superlegierungen trugen die Handelsnamen "IN 939" und "MA 6000", wobei erstere im gegossenen, letztere im pulvermetallurgisch hergestellten und warmverformten sowie geglühten feinkörnigen Zustand vorlag. Die Legierung "IN 939" wies folgende Zusammensetzung auf:

| C | = | 0,15 | Gew.-% |
|---|---|---|---|
| Cr | = | 22,6 | Gew.-% |
| Co | = | 19,1 | Gew.-% |
| Mo | = | 0,05 | Gew.-% |
| W | = | 2,0 | Gew.-% |
| Ta | = | 1,0 | Gew.-% |
| Nb | = | 1,1 | Gew.-% |
| Al | = | 1,9 | Gew.-% |
| Ti | = | 3,7 | Gew.-% |
| Zr | = | 0,1 | Gew.-% |
| Ni | = | Rest | |

Als Pulver wurde eines der Zusammensetzung gemäss Legierung "IN 939" mit einer Partikelgrösse von 50 bis 250 μm verwendet. Die Press- und Wärmebehandlungsbedingungen lauteten wie folgt:

Presstemperatur: 1000° C
Verformungsgeschwindigkeit $\dot\varepsilon$: $3.10^{-1}s^{-1}$
Verformungsgrad $\varepsilon$: 0,15
Nachfolgende
Wärmebehandlung: 1180° C/10 min/Ar +
1160° C/ 4 h/Ar +
850° C/24 h/Ar

Die Zugfestigkeit bei Raumtemperatur betrug 596 MPa.

**Ausführungsbeispiel IV:**

Ähnlich Beispiel I wurden aus feinkörnigem Material der Legierung mit der Handelsbezeichnung "MA 6000" zwei Teil-Werkstücke herausgearbeitet und nach dem Diffusions-Fügeverfahren miteinander verbunden. Als Pulver wurde folgende Mischung verwendet:

80 Gew.-% Legierung "MA 6000" mit der Körnung 50 bis 250 μm
20 Gew.-% Nickelcarbonylpulver mit der Körnung 1 bis 9 μm

Die Verfahrenbedingungen waren wie folgt:

Presstemperatur: 1000° C
Verformungsgeschwindigkeit $\dot\varepsilon$: $3.10^{-1}s^{-1}$
Verformungsgrad $\varepsilon$: 0,15
Nachfolgende Wärmebehandlung: 1265° C/ 2 h/Ar

Die gemessenen Zugfestigkeitswerte bei Raumtemperatur betrugen 603 MPa.

**Ausführungsbeispiel V:**

Siehe Fig. 1 und Fig. 4
Gemäss Beispiel II wurden zwei Teil-Werkstücke miteinander verbunden, wobei die Verfahrensbedingungen genau diesem Beispiel entsprachen, die Teil-Werkstücke jedoch die Form von Fig. 4 aufwiesen: Die Fügeflächen waren konisch und besassen einen Schrägungswinkel α von 20° (voller Öffnungswinkel des Kegels = 140°). Die Zugfestigkeit dieser Verbindung bei Raumtemperatur betrug 739 MPa.

**Ausführungsbeispiel VI:**

Es wurde ein Teil-Werkstück aus der Legierung "MA 6000" (feinkörnig) mit einem Teil-Werkstück aus der Legierung "IN 939" gemäss Verfahren nach Beispiel III, jedoch mit der konischen Form entsprechend Fig. 4 verbunden. Die Zugfestigkeit der Probe bei einer Temperatur von 600° C betrug 698 MPa.

**Ausführungsbeispiel VII:**

Ähnlich Beispiel III wurde aus den beiden Nickelbasis-Superlegierungen mit den Handelsnamen "IN 738" und "MA 6000" je ein Teil-Werkstück gemäss Fig. 4 herausgearbeitet. die Legierung "IN 738" lag in gegossenem Zustand vor und hatte folgende Zusammensetzung:

| C | = | 0,17 | Gew.-% |
|---|---|---|---|
| Cr | = | 17,0 | Gew.-% |
| Co | = | 8,5 | Gew.-% |
| Mo | = | 1,7 | Gew.-% |
| W | = | 2,6 | Gew.-% |
| Ta | = | 1,7 | Gew.-% |
| Nb | = | 0,9 | Gew.-% |
| Al | = | 3,4 | Gew.-% |
| Ti | = | 3,4 | Gew.-% |
| Zr | = | 0,1 | Gew.-% |
| Ni | = | Rest | |

Das zum Heisspressen benutzte Pulver entsprach in seiner Zusammensetzung der Legierung "IN 738" und hatte eine Partikelgrösse von 50 bis 250 μm. Die Verfahrensbedingungen exkl. Wärmebehandlung waren die gleichen wie bei Beispiel III. Leztere wurde wie folgt durchgeführt:

1180° C/10 min/Ar +
1120° C/ 2 h/Ar +
850° C/24 h/Ar

Die Zugfestigkeit der Probe bei 600° C betrug 555 MPa.

Die Erfindung ist nicht durch die angegebenen Ausführungsbeispiele begrenzt.

Die Verformungsgeschwindigkeit $\dot{\varepsilon}$ kann gezielt zwischen 1 und $5 \cdot 10^{-1}s^{-1}$, der entsprechende Verformungsgrad $\varepsilon$ der zu verbindenden und zu verformenden Zone zwischen den Werten 0,10 und 0,20 eingestellt werden. Der Diffusions-Fügeprozess kann sowohl unter Vakuum wie unter Schutzgas, üblicherweise unter Argon bei Temperaturen von 950 bis 1000°C durchgeführt werden. Das gleiche gilt für die nachfolgende Wärmebehandlung des Gesamt-Werkstücks, die vorteilhafterweise während 0,5 bis 4 h im Temperaturbereich von 1150 bis 1280°C bewerkstelligt wird. Dabei kann die Wärmebehandlung auch stufenweise bei verschiedenen gestaffelten Temperaturen erfolgen (vergl. Beispiel B). Eine oder beide der zu verbindenden Werkstückflächen können aufgerauht sein, wobei die Rauhigkeit, senkrecht zur Oberfläche gemessen 50 bis 500 μm (je nach Grösse des Werkstückes) betragen kann. Das Aufrauhen kann vorzugsweise im Erzeugen von konzentrischen oder parallelen Rillen von 100 bis 250 μm Tiefe, 100 bis 400 μm Breite und einem mittleren Abstand von 250 bis 2000 μm bestehen. Die zu verbindenden Werkstückflächen können vorteilhafterweise gegenüber der zur Längsachse bzw. der Pressrichtung (Hauptachse der Presse) senkrechten Ebene (Hauptebene) geneigt sein und einen Schrägungswinkel α von 15 bis 30° einnehmen. Dies führt zu keil- bzw. kegelförmigen Werkstückflächen, was sich sehr günstig auf die Verformung in der zu verbindenden Zone auswirkt, da die in der Berührungsfläche liegenden Kraftkomponenten ein inniges Durchkneten des Werkstoffs bewirken was die Diffusion verbessert.

Es ist selbstverständlich dass sich das Verfahren auch auf andere als die in den Beispielen gezeigten Werkstoffe mit oder ohne Dispersoiden anwenden lässt. Das Hauptanwendungsgebiet ist jedoch das der Hochtemperaturlegierungen, speziell der Nickel- und Kobaltbasis-Superlegierungen.

Die Vorteile des vorgeschlagenen Verfahrens liegen in den nachfolgenden Punkten:
- Keine engen Toleranzen der Teil-Werkstücke erforderlich, wodurch Bearbeitungskosten gespart werden.
- Keine Porenbildung in der Verbindungszone, wie dies oft bei Hartlöt- und anderen Schweissmethoden der Fall ist.
- Zeitgewinn, geringere Anforderungen an das Fertigungspersonal.

**Patentansprüche**

1. Verfahren zum Verbinden von Bauteilen (1, 3) aus einer Superlegierung im festen Zustand ohne flüssige Phase nach dem Diffusions-Fügeprozess, wobei die zu verbindenden Bauteilflächen bearbeitet und unter Vakuum oder Schutzgasatmosphäre bei erhöhter Temperatur zusammengepresst werden, dadurch gekennzeichnet, dass zwischen die zu verbindenden Bauteilflächen eine Schicht von 1 bis 2 mm Dicke (d) aus einem Pulver (2, 4) mit einer Partikelgrösse von 50 bis 250 μm gebracht wird, welches keinerlei Flussmittel oder schmelzpunktserniedrigende Bestandteile enthält und dessen Zusammensetzung gleich oder ähnlich derjenigen der zu verbindenden Bauteile (1, 3) ist und dass die zu verbindenden Bauteile (1, 3) mit einer Verformungsgeschwindigkeit $\dot{\varepsilon}$ von 1 bis $5 \cdot 10^{-1}s^{-1}$ bei einer Temperatur zwischen 950 und 1000°C aufeinander gepresst werden, derart, dass die gesamte Stauchung in der plastisch verformten Zone der Bauteilflächen einem Verformungsgrad $\varepsilon$ von 0,10 bis 0,20 entspricht, und dass das auf diese Weise erzeugte Werkstück während 0,5 bis 4 h einer Wärmebehandlung unter Argon-Atmosphäre bei einer Temperatur im Bereich von 1150 bis 1280°C unterworfen wird, wobei $\varepsilon$ und $\dot{\varepsilon}$ wie folgt definiert sind:

$$\varepsilon = \left| \ln\frac{A_o}{A_f} \right| \ ,$$

$$\dot{\varepsilon} = \frac{d \left[ \left| \ln\frac{A_o}{A_f} \right| \right]}{dt} \ ,$$

$A_o$ = Querschnittsfläche des Werkstücks vor der Umformung,
$A_f$ = Querschnittsfläche des Werkstücks nach der Umformung,
ln = natürlicher Logarithmus,
t = Zeit in Sekunden.

2. Verfahren nach Anspruch 1, dadurch gekennzeichnet, dass das Pulver (2) in seiner Zusammensetzung genau derjenigen der zu verbindenden Bauteile (1) entspricht.

3. Verfahren nach Anspruch 1, dadurch gekennzeichnet, dass mindestens eine der zu verbindenden Bauteilflächen der Bauteile (1, 3) vor dem Diffusions-Fügeprozess aufgerauht wird, dergestalt, dass die Rauhigkeit, senkrecht zur Oberfläche gemessen 50 bis 500 μm beträgt.

4. Verfahren nach Anspruch 3, dadurch gekennzeichnet, dass das Aufrauhen darin besteht, dass die Bauteilfläche mit Rillen (5) von 100 bis 250 μm Tiefe und 100 bis 400 μm Breite und einem mittleren Abstand von 250 bis 2000 μm versehen wird.

5. Verfahren nach Anspruch 1, dadurch gekennzeichnet, dass die zu verbindenden Bauteilflächen der Bauteile (1, 3) gegenüber der zur Längsachse und Pressrichtung senkrechten Ebene einen Schrägungswinkel (α) von 15 bis 30° einnehmen.

6. Verfahren nach Anspruch 5, dadurch gekennzeichnet, dass die Bauteilflächen Kegelflächen mit einem Schrägungswinkel (α)

von 20° entsprechend einem vollen Öffnungswinkel von 140° sind.

7. Verfahren nach Anspruch 1, dadurch gekennzeichnet, dass die beim Aufeinanderpressen der Bauteile (1) angewendete Temperatur 1000°C beträgt und dass die Bauteile (1) aus einer oxyddispersionsgehärteten Nickelbasis-Superlegierung bestehen und die nachfolgende Zusammensetzung aufweisen:

| | | | |
|----|---|------|---------|
| Cr | = | 15   | Gew.-% |
| W  | = | 4,0  | Gew.-% |
| Mo | = | 2,0  | Gew.-% |
| Al | = | 4,5  | Gew.-% |
| Ti | = | 2,5  | Gew.-% |
| Ta | = | 2,0  | Gew.-% |
| C  | = | 0,05 | Gew.-% |
| B  | = | 0,01 | Gew.-% |
| Zr | = | 0,15 | Gew.-% |
| $Y_2O_3$ | = | 1,1 | Gew.-% |
| Ni | = | Rest | |

8. Verfahren nach Anspruch 1, dadurch gekennzeichnet, dass ein Bauteil (1) aus einer oxyddispersionsgehärteten Nickelbasis-Superlegierung der Zusammensetzung

| | | | |
|----|---|------|---------|
| Cr | = | 15   | Gew.-% |
| W  | = | 4,0  | Gew.-% |
| Mo | = | 2,0  | Gew.-% |
| Al | = | 4,5  | Gew.-% |
| Ti | = | 2,5  | Gew.-% |
| Ta | = | 2,0  | Gew.-% |
| C  | = | 0,05 | Gew.-% |
| B  | = | 0,01 | Gew.-% |
| Zr | = | 0,15 | Gew.-% |
| $Y_2O_3$ | = | 1,1 | Gew.-% |
| Ni | = | Rest | |

mit einem Bauteil (3) aus einer nicht-dispersionsgehärteten, gegossenen Nickelbasis-Superlegierung der Zusammensetzung

| | | | |
|----|---|------|---------|
| C  | = | 0,15 | Gew.-% |
| Cr | = | 22,6 | Gew.-% |
| Co | = | 19,1 | Gew.-% |
| Mo | = | 0,05 | Gew.-% |
| W  | = | 2,0  | Gew.-% |
| Ta | = | 1,0  | Gew.-% |
| Nb | = | 1,1  | Gew.-% |
| Al | = | 1,9  | Gew.-% |
| Ti | = | 3,7  | Gew.-% |
| Zr | = | 0,1  | Gew.-% |
| Ni | = | Rest | |

verbunden wird, wobei als Pulver (4) ein solches entsprechend der Zusammensetzung der nicht-dispersionsgehärteten Legierung verwendet wird.

9. Verfahren nach Anspruch 1, dadurch gekennzeichnet, dass ein Bauteil (1) aus einer oxyddispersionsgehärteten Nickelbasis-Superlegierung der Zusammensetzung

| | | | |
|----|---|------|---------|
| Cr | = | 15   | Gew.-% |
| W  | = | 4,0  | Gew.-% |
| Mo | = | 2,0  | Gew.-% |
| Al | = | 4,5  | Gew.-% |
| Ti | = | 2,5  | Gew.-% |
| Ta | = | 2,0  | Gew.-% |
| C  | = | 0,05 | Gew.-% |
| B  | = | 0,01 | Gew.-% |
| Zr | = | 0,15 | Gew.-% |
| $Y_2O_3$ | = | 1,1 | Gew.-% |
| Ni | = | Rest | |

mit einem Bauteil (3) aus einer nicht-dispersionsgehärteten, gegossenen Superlegierung der Zusammensetzung

| | | | |
|----|---|------|---------|
| C  | = | 0,17 | Gew.-% |
| Cr | = | 17,0 | Gew.-% |
| Co | = | 8,5  | Gew.-% |
| Mo | = | 1,7  | Gew.-% |
| W  | = | 2,6  | Gew.-% |
| Ta | = | 1,7  | Gew.-% |
| Nb | = | 0,9  | Gew.-% |
| Al | = | 3,4  | Gew.-% |
| Ti | = | 3,4  | Gew.-% |
| Zr | = | 0,1  | Gew.-% |
| Ni | = | Rest | |

verbunden wird, wobei als Pulver (4) ein solches entsprechend der Zusammensetzung der nicht-dispersionsgehärteten Legierung verwendet wird.

**Claims**

1. Method for joining structural members (1, 3) composed of a superalloy in the solid state without liquid phase by the diffusion joining process, in which the faces of the structural members to be joined are machined and pressed together under vacuum or protective gas atmosphere at elevated temperature, characterized in that there is deposited, between the faces of the structural members to be joined, a layer 1 to 2 mm thick (d) composed of a powder (2, 4) which has a particle size of 50 to 250 μm, which contains no flux or consistuents which lower the melting point of any kind and the composition of which is identical or similar to that of the structural members (1, 3) to be joined and in that the structural members (1, 3) to be joined are pressed against each other with a deformation velocity $\dot{\varepsilon}$ of 1 to 5 x 10⁻¹s⁻¹ at a temperature between 950 and 1000°C in a manner such that the upset in the plastically deformed zone of the faces of the structural members is equivalent to a degree of deformation $\varepsilon$ of 0.10 to 0.20, and in that the workpiece produced in this manner is subjected to a heat treatment for 0.5 to 4 h under an atmosphere of argon at a temperature in the range from 1,150 to 1,280°C, $\varepsilon$ and $\dot{\varepsilon}$ being defined as follows:

$$\varepsilon = \left| \ln\frac{A_o}{A_f} \right| \, ,$$

$$\dot{\varepsilon} = \frac{d\left[ \left| \ln\frac{A_o}{A_f} \right| \right]}{dt} \, ,$$

$A_o$ = cross-sectional area of the workpiece before the deformation,

$A_f$ = cross-sectional area of the workpiece after the deformation,

ln = natural logarithm,

t = time in seconds.

2. Method according to Claim 1, characterized in that the powder (2) corresponds precisely to that of the structural members (1) to be joined in its composition.

3. Method according to Claim 1, characterized in that at least one of the structural member faces to be joined of the structural members (1, 3) is roughened up before the diffusion joining process in a manner such that the roughness measured perpendicular to the surface is 50 to 500 $\mu$m.

4. Method according to Claim 3, characterized in that the roughening up consists in providing the structural member face with grooves (5) 100 to 250 $\mu$m deep and 100 to 400 $\mu$m wide and having a mean spacing of 250 to 2000 $\mu$m.

5. Method according to Claim 1, characterized in that the structural member faces to be joined of the structural members (1, 3) assume an angle of slope ($\alpha$) of 15 to 30° with respect to the plane perpendicular to the longitudinal axis and pressing direction.

6. Method according to Claim 5, characterized in that the structural member faces are cone faces with an angle of slope ($\alpha$) of 20° corresponding to a full cone angle of 140°.

7. Method according to Claim 1, characterized in that the temperature used when pressing the structural members (1) against each other is 1000°C and in that the structural members (1) are composed of an oxide-dispersion-hardened nickel-base superalloy and have the following composition:

| | | | |
|---|---|---|---|
| Cr | = | 15 | % by weight, |
| W | = | 4.0 | % by weight, |
| Mo | = | 2.0 | % by weight, |
| Al | = | 4.5 | % by weight, |
| Ti | = | 2.5 | % by weight, |
| Ta | = | 2.0 | % by weight, |
| C | = | 0.05 | % by weight, |
| B | = | 0.01 | % by weight, |
| Zr | = | 0.15 | % by weight, |
| $Y_2O_3$ | = | 1.1 | % by weight, |
| Ni | = | remainder | |

8. Method according to Claim 1, characterized in that a structural member (1) composed of an oxide-dispersion-hardened nickel-base superalloy of the composition

| | | | |
|---|---|---|---|
| Cr | = | 15 | % by weight, |
| W | = | 4.0 | % by weight, |
| Mo | = | 2.0 | % by weight, |
| Al | = | 4.5 | % by weight, |
| Ti | = | 2.5 | % by weight, |
| Ta | = | 2.0 | % by weight, |
| C | = | 0.05 | % by weight, |
| B | = | 0.01 | % by weight, |
| Zr | = | 0.15 | % by weight, |
| $Y_2O_3$ | = | 1.1 | % by weight, |
| Ni | = | remainder | |

is joined to a structural member (3) composed of a nondispersion-hardened cast nickel-base superalloy of the composition

| | | | |
|---|---|---|---|
| C | = | 0.15 | % by weight, |
| Cr | = | 22.6 | % by weight, |
| Co | = | 19.1 | % by weight, |
| Mo | = | 0.05 | % by weight, |
| W | = | 2.0 | % by weight, |
| Ta | = | 1.0 | % by weight, |
| Nb | = | 1.1 | % by weight, |
| Al | = | 1.9 | % by weight, |
| Ti | = | 3.7 | % by weight, |
| Zr | = | 0.1 | % by weight, |
| Ni | = | remainder, | |

the powder (4) used being one corresponding to the composition of the non-dispersion-hardened alloy.

9. Method according to Claim 1, characterized in that a structural member (1) composed of an oxide-dispersion hardened nickel-base superalloy of the composition

| | | | |
|---|---|---|---|
| Cr | = | 15 | % by weight, |
| W | = | 4.0 | % by weight, |
| Mo | = | 2.0 | % by weight, |
| Al | = | 4.5 | % by weight, |
| Ti | = | 2.5 | % by weight, |
| Ta | = | 2.0 | % by weight, |
| C | = | 0.05 | % by weight, |
| B | = | 0.01 | % by weight, |
| Zr | = | 0.15 | % by weight, |
| $Y_2O_3$ | = | 1.1 | % by weight, |
| Ni | = | remainder | |

is joined to a structural member (3) composed of a non-dispersion-hardened cast superalloy of the composition

| | | | |
|---|---|---|---|
| C | = | 0.17 | % by weight, |
| Cr | = | 17.0 | % by weight, |
| Co | = | 8.5 | % by weight, |
| Mo | = | 1.7 | % by weight, |
| W | = | 2.6 | % by weight, |
| Ta | = | 1.7 | % by weight, |
| Nb | = | 0.9 | % by weight, |
| Al | = | 3.4 | % by weight, |
| Ti | = | 3.4 | % by weight, |
| Zr | = | 0.1 | % by weight, |
| Ni | = | remainder | |

the powder (4) used being one corresponding to the composition of the non-dispersion-hardened alloy.

## Revendications

1. Procédé pour assembler des éléments de construction (1, 3) en superalliage à l'état solide sans phase liquide selon la méthode de liaison par diffusion, dans lequel les faces des éléments de construction à assembler sont usinées et sont assemblées par pressage à haute température, sous vide ou sous une atmosphère protectrice, caractérisé en ce qu'entre les faces des éléments de construction à assembler est déposée une couche de 1 à 2 mm d'épaisseur (d) d'une poudre (2, 4) présentant une granulométrie de 50 à 250 μm, qui ne contient aucun fondant ni aucun composant qui abaisse le point de fusion et dont la composition est identique à ou proche de celle des éléments de construction (1, 3) à assembler, en ce que les éléments de construction (1, 3) à assembler sont pressés l'un contre l'autre à une température comprise entre 950 et 1000°C et avec une vitesse de déformation $\dot{\varepsilon}$ de 1 à $5.10^{-1}s^{-1}$, de sorte que le refoulement global dans la zone déformée plastiquement des faces des éléments de construction correspond à un taux de déformation $\varepsilon$ de 0,10 à 0,20, et en ce que la pièce obtenue de cette façon est soumise pendant 0,5 à 4 h à un traitement thermique dans le domaine de température de 1150 à 1280°C, sous une atmosphère d'argon, $\varepsilon$ et $\dot{\varepsilon}$ étant définis comme suit:

$$\varepsilon = \left| \ln\frac{A_o}{A_f} \right| \quad ,$$

$$\dot{\varepsilon} = \frac{d \left[ \left| \ln\frac{A_o}{A_f} \right| \right]}{dt} \quad ,$$

où:

$A_o$ = aire de la section de la pièce avant la déformation,

$A_f$ = aire de la section de la pièce après la déformation,

ln = logarithme naturel,

t = temps, en secondes.

2. Procédé suivant la revendication 1, caractérisé en ce que la composition de la poudre (2) correspond exactement à celle des éléments de construction (1) à assembler.

3. Procédé suivant la revendication 1, caractérisé en ce qu'au moins une des faces des éléments de construction (1, 3) à assembler est rendue rugueuse avant l'opération de liaison par diffusion, de telle façon que la rugosité, mesurée perpendiculairement à la surface, vaut de 50 à 500 μm.

4. Procédé suivant la revendication 3, caractérisé en ce que l'on rend la surface rugueuse par une opération qui consiste à tailler dans la face de l'élément de construction des rainures (5) de 100 à 250 μm de profondeur et de 100 à 400 μm de largeur, avec un écartement moyen de 250 à 2000 μm.

5. Procédé suivant la revendication 1, caractérisé en ce que les faces des éléments de construction (1, 3) à assembler présentent un angle d'inclinaison (α) de 15 à 30° par rapport au plan perpendiculaire à l'axe longitudinal et à la direction de pressage.

6. Procédé suivant la revendication 5, caractérisé en ce que les faces des éléments de construction sont des surfaces coniques avec un angle d'inclinaison (α) de 20° correspondant à un angle au sommet de 140°.

7. Procédé suivant la revendication 1, caractérisé en ce que la température appliquée lors du pressage des éléments de construction (1) s'élève à 1000°C et en ce que les éléments de construction (1) se composent d'un superalliage à base de nickel durci par dispersion d'oxydes et présentent la composition pondérale suivante:

| | | | |
|---|---|---|---|
| Cr | = | 15 | % |
| W | = | 4,0 | % |
| Mo | = | 2,0 | % |
| Al | = | 4,5 | % |
| Ti | = | 2,5 | % |
| Ta | = | 2,0 | % |
| C | = | 0,05 | % |
| B | = | 0,01 | % |
| Zr | = | 0,15 | % |
| $Y_2O_3$ | = | 1,1 | % |
| Ni | = | Reste. | |

8. Procédé suivant la revendication 1, caractérisé en ce qu'un élément de construction (1) constitué d'un superalliage à base de nickel, durci par dispersion d'oxydes, ayant la composition pondérale suivante:

| | | | |
|---|---|---|---|
| Cr | = | 15 | % |
| W | = | 4,0 | % |
| Mo | = | 2,0 | % |
| Al | = | 4,5 | % |
| Ti | = | 2,5 | % |
| Ta | = | 2,0 | % |
| C | = | 0,05 | % |
| B | = | 0,01 | % |
| Zr | = | 0,15 | % |
| $Y_2O_3$ | = | 1,1 | % |
| Ni | = | Reste, | |

est assemblé à un élément de construction (3) constitué d'un superalliage à base de nickel, coulé, qui n'est pas durci par dispersion et qui présente la composition pondérale suivante:

| | | | |
|---|---|---|---|
| C | = | 0,15 | % |
| Cr | = | 22,6 | % |
| Co | = | 19,1 | % |
| Mo | = | 0,05 | % |
| W | = | 2,0 | % |
| Ta | = | 1,0 | % |
| Nb | = | 1,1 | % |
| Al | = | 1,9 | % |
| Ti | = | 3,7 | % |
| Zr | = | 0,1 | % |
| Ni | = | Reste, | |

dans lequel on utilise en guise de poudre (4) une poudre correspondant à la composition de l'alliage qui n'est pas durci par dispersion.

9. Procédé suivant la revendication 1, caractérisé en ce qu'un élément de construction (1) constitué d'un superalliage à base de nickel, durci par dispersion d'oxydes, ayant la composition pondérale suivante:

| | | | |
|---|---|---|---|
| Cr | = | 15 | % |
| W | = | 4,0 | % |
| Mo | = | 2,0 | % |
| Al | = | 4,5 | % |
| Ti | = | 2,5 | % |
| Ta | = | 2,0 | % |
| C | = | 0,05 | % |
| B | = | 0,01 | % |
| Zr | = | 0,15 | % |
| $Y_2O_3$ | = | 1,1 | % |
| Ni | = | Reste, | |

est assemblé à un élément de construction (3) constitué d'un superalliage coulé, qui n'est pas durci par dispersion et qui présente la composition pondérale suivante:

| | | | |
|---|---|---|---|
| C | = | 0,17 | % |
| Cr | = | 17,0 | % |
| Co | = | 8,5 | % |
| Mo | = | 1,7 | % |
| W | = | 2,6 | % |
| Ta | = | 1,7 | % |
| Nb | = | 0,9 | % |
| Al | = | 3,4 | % |
| Ti | = | 3,4 | % |
| Zr | = | 0,1 | % |
| Ni | = | Reste, | |

dans lequel on utilise en guise de poudre (4) une poudre correspondant à la composition de l'alliage qui n'est pas durci par dispersion.

0 155 490

# Fig.1

# Fig.2

# Fig.3

# Fig.4

1